# EUROPÄISCHE PATENTANMELDUNG

(11) **EP 2 359 926 A1**
(43) Veröffentlichungstag der Anmeldung: **24.08.2011**
(21) Anmeldenummer: 10000622.0
(22) Anmeldetag: 22.01.2010
(51) Int. Cl.: B01D 53/86, F23J 15/02

(54) **Verfahren zur Ammoniakentfernung und Regenerativ-Wärmetauscher mit Katalytischer Funktion**

(71) Anmelder: Balcke-Dürr GmbH, 40882 Ratingen (DE)
(72) Erfinder: Podhorsky, Miroslav, 40882 Ratingen (DE); Korte, Nicolas, 45219 Essen (DE); Trautner, Jürgen, 51643 Gummersbach (DE); Holten, Wolfgang, 40629 Düsseldorf (DE)
(74) Vertreter: Lang, Friedrich

(57) **Zusammenfassung**

Die Erfindung betrifft ein Verfahren zur Ammoniakentfernung aus dem Rauchgas eines Kraftwerks, insbesondere in einem Kohlekraftwerk, basierend auf einer selektiven nicht-katalytische Reduktion, wobei ein Rauchgasvolumenstrom der selektiven nicht-katalytischen Reduktion nachfolgend einer katalytischen Reaktion unterzogen wird und wobei diese katalytische Reaktion in einem Regenerativ-Wärmetauscher mit katalytischen Eigenschaften erfolgt. Die Erfindung betrifft ferner einen in diesem Verfahren nutzbaren Regenerativ-Wärmetauscher.

## Beschreibung

Die Erfindung betrifft ein Verfahren zur Ammoniakentfernung aus dem Rauchgas eines Kraftwerks. Die Erfindung betrifft ferner einen in diesem Verfahren nutzbaren Regenerativ-Wärmetauscher gemäß dem Oberbegriff des nebengeordneten Anspruchs.

Es ist bekannt, zur Rauchgasentstickung in einem Kraftwerk und insbesondere in einem Kohlekraftwerk eine sogenannte selektive nicht-katalytische Reduktion (SNCR - Selective Non Catalytic Reduction) vorzunehmen, um Stickoxide (NOₓ) in den Rauchgasen abzubauen. Die selektive nicht-katalytische Reduktion stellt eine einfache und preisgünstige Entstickungstechnologie von Rauchgasen dar. Hierbei wird durch Thermolyse zugeführtes Ammoniak (NH₃), Ammoniakwasser oder Harnstoff mit den im Rauchgas enthaltenen gasförmigen Stickoxiden zu Wasserdampf und Stickstoff umgesetzt.

Problematisch ist, dass prozessbedingt ein so genannter NH₃-Schlupf (nicht umgesetztes NH₃ im Rauchgas) gegeben ist. Dieser NH₃-Schlupf ist u. a. wegen des Geruches, der allgemeinen Schädlichkeit und der Oxidation in der Atmosphäre unerwünscht.

Der Erfindung liegt die Aufgabe zugrunde, die Rauchgasentstickung zu verbessern.

Diese Aufgabe wird gelöst durch ein Verfahren zur Ammoniakentfernung aus dem Rauchgas mit den Merkmalen des Anspruchs 1. Diese Aufgabe wird ferner gelöst durch einen Wärmetauscher gemäß den Merkmalen des nebengeordneten Anspruchs. Die Lösung der Aufgabe erstreckt sich auch auf ein Verfahren zur katalytischen Nachbehandlung gemäß dem zweiten nebengeordneten Anspruch. Die jeweils abhängigen Ansprüche betreffen bevorzugte Weiterbildungen.

Die Lösung der Aufgabe gelingt mit einem Verfahren zur Rauchgasentstickung basierend auf einer selektiven nicht-katalytischen Reduktion, wobei ein betreffender Rauchgasvolumenstrom nachfolgend der selektiven nicht-katalytischen Reduktion, bzw. stromabwärts dieser selektiven nicht-katalytischen Reduktion, einer katalytischen Reaktion unterzogen wird und wobei diese katalytische Reaktion in einem Regenerativ-Wärmetauscher mit katalytischen Eigenschaften erfolgt.

Diese katalytische Reaktion im Regenerativ-Wärmetauscher dient insbesondere dazu, die im betreffenden Rauchgasvolumenstrom enthaltenen NH₃-Reste, wobei es sich insbesondere um NH₃-Reste eines NH₃-Schlupfes (wie zuvor erläutert) handelt, zu reduzieren. Eine solche katalytische Reaktion ist z. B. eine Oxidationsreaktion bei der das NH₃ in NOₓ umgewandelt wird. Das vorgeschlagene Verfahren eignet sich bevorzugt für ein Kraftwerk und insbesondere für ein Kohlekraftwerk. Bevorzugte Weiterbildungen dieses Verfahrens ergeben sich analog zu den nachfolgenden Ausführungen.

Ein wesentlicher Aspekt der Erfindung besteht darin, einen meist ohnehin vorhandenen Regenerativ-Wärmetauscher, der insbesondere zur Wärmeübertragung vom Rauchgasvolumenstrom auf einen Frischluftvolumenstrom (z. B. Verbrennungsluft) dient, so auszubilden, dass dieser eine katalytische Funktion wahrnehmen und insbesondere die im Rauchgasvolumenstrom enthaltene NH₃-Reste mittels einer katalytischen Reaktion reduzieren kann. Die Nutzung eines Regenerativ-Wärmetauschers quasi als Katalysatorträger hat eine Ersparnis an Investitionskosten als auch an Betriebskosten zur Folge. Die Erfindung eignet sich insbesondere auch zur Nachrüstung von bestehenden Kraftwerken.

Als Katalysatorträger können die regenerativen Flächen des Wärmetauschers oder Flächen an einem separaten Träger dienen, der bevorzugt vor dem Eintritt des Rauchgases in den Wärmetauschers angeordnet ist. Dieser separate Träger ist bevorzugt stationär angeordnet. Er ist besonders zweckmäßig, ihn als Gitterrost auszubilden, wobei die mit einem Katalysator zu beschichtende Oberfläche des Gitterrostes ausreichend groß ist, um die gewünschte Reduktion zu ermöglichen.

Die Aufgabe wird ferner gelöst von einem Regenerativ-Wärmetauscher mit einem drehbaren Rotor oder einem feststehenden Stator zur Wärmeübertragung von wenigstens einem und bevorzugt exakt einem Rauchgasvolumenstrom auf wenigstens einen anderen und bevorzugt exakt einen anderen Gasvolumenstrom, wobei es sich bei letzterem insbesondere um einen Frischluftvolumenstrom handelt. Ein solcher Regenerativ-Wärmetauscher dient insbesondere der Luftvorwärmung (Luvo-Typ) in Kraftwerken. Solche Regenerativ-Wärmetauscher sind z. B. aus DE 10 2005 053 378 A1 bekannt. Es ist vorgesehen, dass der Rotor oder der Stator bezüglich des Rauchgasvolumenstroms katalytische Eigenschaften besitzt bzw. mit katalytischen Eigenschaften ausgebildet ist.

Gemäß einer bevorzugten Weiterbildung ist vorgesehen, dass der Rotor oder der Stator wenigstens eine Katalysatorschicht aufweist, die in einem mit dem betreffenden Rauchgasvolumenstrom in Kontakt gelangenden Flächenabschnitt ausgebildet ist. Bevorzugt ist vorgesehen, dass diese (wenigstens eine) Katalysatorschicht zur Reduktion von NH₃-Resten im Rauchgasvolumenstrom, wobei es sich hierbei insbesondere um einen NH₃-Schlupf aus der vorgelagerten selektiven nicht-katalytischen Reduktion handelt, geeignet ist.

Der Rotor oder der Stator dient somit als Katalysatorträger. Bevorzugt ist hierbei vorgesehen, dass die Katalysatorschicht direkt auf den Rotorkörper oder den Statorkörper aufgebracht bzw. darauf angebracht ist. Bevorzugt ist ebenfalls vorgesehen, dass die Katalysatorschicht auf einem im Rotor oder Stator angeordneten Heizblech aufgebracht bzw. darauf angebracht ist. Auch eine Kombination ist möglich. Die Katalysatorschicht kann unmittelbar auf dem Rotorkörper, dem Statorkörper oder dem Heizblech aufgebracht sein, wobei gegebenenfalls eine als Zwischenschicht ausgebildete Haftvermittlungsschicht vorgesehen ist. Ebenfalls kann die Katalysatorschicht in Form von Platten oder Kacheln aufgebracht sein.

Gemäß einer bevorzugten Weiterbildung ist vorgesehen, dass die Katalysatorschicht bezüglich einer Durchströmungslänge des Rauchgasvolumenstroms durch den Rotor oder den Stator (diese Durchströmungslänge entspricht insbesondere der axiale Bauhöhe) nur über eine Teillänge aufgebracht ist. Insbesondere ist eine Katalysatorschicht vornehmlich im Eintrittsbereich des Rauchgasvolumenstroms in den Rotor oder in den Stator, d. h. an der "heißen" Seite, angeordnet bzw. ausgebildet.

Gemäß einer bevorzugten Weiterbildung ist die Katalysatorschicht aus einem Metall gebildet. Insbesondere ist die Katalysatorschicht aus einem Zeolith-Material oder zumindest aus einem zeolithhaltigen Material gebildet. Ein Zeolith-Material ist ein Silikat-Mineral wie z. B. ein Alumosilikat.

Gemäß einer bevorzugten Weiterbildung ist vorgesehen, dass der Rotor oder der Stator wenigstens zwei aus einem unterschiedlichen Schichtmaterial gebildete Katalysatorschichten aufweist, die in verschiedenen Flächenbereichen des Rotors oder Stators ausgebildet bzw. aufgebracht sind. Hierdurch kann der katalytische Prozess eingestellt werden.

Die Aufgabe wird ferner gelöst von einem Verfahren zur katalytischen Nachbehandlung eines Rauchgasvolumenstroms, bevorzugt in einem Kraftwerk und insbesondere in einem Kohlekraftwerk, unter Verwendung eines Regenerativ-Wärmetauschers gemäß den vorausgehenden Erläuterungen. Für dieses Verfahren gelten analog die vorausgehenden Ausführungen.

Die Erfindung wird nachfolgend in nicht einschränkender Weise anhand der Figuren näher erläutert. Es zeigen:
- Fig. 1: eine Anlage zur Durchführung des erfindungsgemäßen Verfahrens in einer schematischen Ansicht;
- Fig. 2: den Rotor des in Fig. 1 gezeigten Regenerativ-Wärmetauschers in einer perspektivischen Ansicht;
- Fig. 3: ein in den Rotor der Fig. 2 einsetzbares Heizblechpaket in einer perspektivischen Ansicht; und
- Fig. 4: ein weiteres Beispiel für einen Rotor zusammen mit einem vorgeschalteten Katalysatorträger in einer perspektivischen Ansicht.

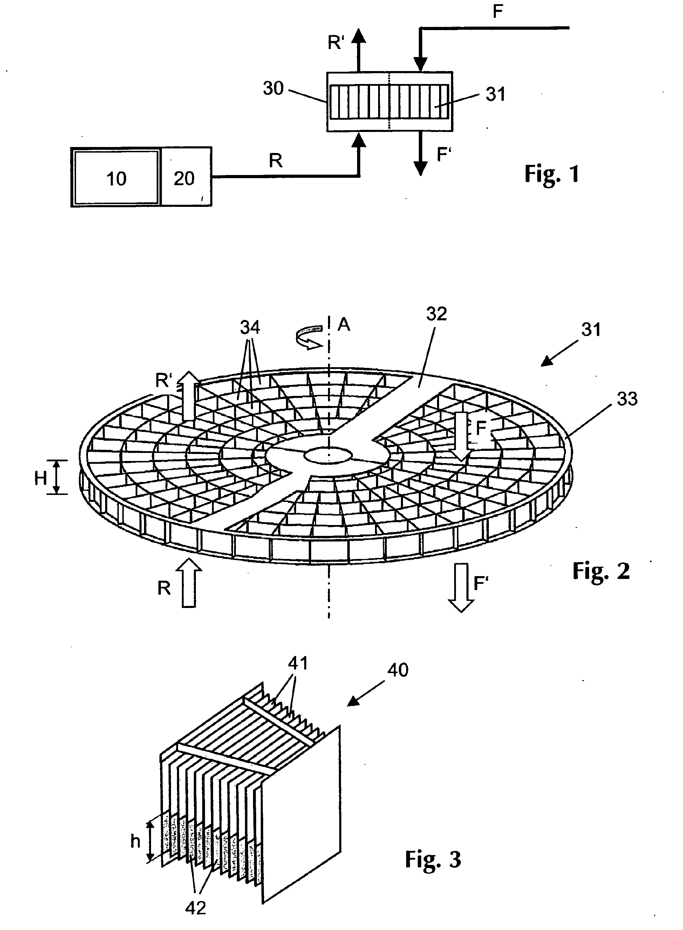

Die in **Fig. 1** schematisch gezeigte Anlage zur Ammoniakentfernung aus einem Rauchgas eines Kraftwerks umfasst eine Brennkammer 10 in der ein Verbrennungsprozess stattfindet, von dem ein Rauchgasvolumenstrom abgeht. Der Rauchgasvolumenstrom wird einer selektiven nicht-katalytischen Reduktion zur Rauchgasentstickung unterworfen, was schematisch mit dem Bezugzeichen 20 angegeben ist. Die selektive nicht-katalytische Reduktion kann direkt im Verbrennungsprozess oder danach, bevorzugt unmittelbar danach, durchgeführt werden. Der abgehende heiße Rauchgasvolumenstrom R wird einem Regenerativ-Wärmetauscher 30 mit einem drehenden Rotor 31 (alternativ einem feststehenden Stator) zugeführt, der die im Rauchgasvolumenstrom R enthaltene Wärme auf einen Frischluftvolumenstrom F überträgt. Der Rauchgasvolumenstrom verlässt als abgekühlter Rauchgasvolumenstrom R' den Regenerativ-Wärmetauscher 30. Der Frischluftvolumenstrom F durchströmt den Regenerativ-Wärmetauscher 30 im Gegenstrom und verlässt diesen als aufgewärmter Frischluftvolumenstrom F', der z. B. dem Verbrennungsprozess zugeführt werden kann.

Da bei der selektiven nicht-katalytischen Reduktion (20) ein so genannter NH₃-Schlupf gegeben ist (wie eingangs erläutert), enthält der Rauchgasvolumenstrom R nicht umgesetztes NH₃. Die regenerativen Flächen des Rotors 31 sind daher mit katalytischen Eigenschaften ausgebildet, zur Reduktion dieser im Rauchgasvolumenstrom enthaltenen NH₃-Reste. Ziel ist es, die NH₃-Konzentration im abgehenden Rauchgasvolumenstrom R' auf ein bspw. gesetzlich zulässiges Höchstmaß (derzeit 10 mg/Nm³) zu reduzieren. Erfindungsgemäß ist vorgesehen, dass der Rotor 31 des Regenerativ-Wärmetauschers 30 als Katalysatorträger fungiert und wenigstens eine zumindest bereichsweise ausgebildete Katalysatorschicht aufweist, wie nachfolgend erläutert.

**Fig. 2** zeigt den Rotor 31 in einer perspektivischen Ansicht. Der zylindrisch ausgebildete und um eine Achse A rotierende Rotor 31 wird im Gegenstromverfahren vom Rauchgasvolumenstrom R und vom Frischluftvolumenstrom F durchströmt, was schematisch mit entsprechenden Strömungspfeilen dargestellt ist. Zur Trennung der Gasvolumenströme R und F ist eine Radialdichtung 32 vorgesehen. Zur Abdichtung am Außenrand des Rotors 31 dient eine Umfangsdichtung 33. Der Rotor 31 weist in axialer Richtung (A) eine Höhe H auf, die der Durchströmungslänge der Gasvolumenströme R und F entspricht. Der Rotorkörper des Rotors 31 ist segmentiert ausgebildet und weist eine Vielzahl von Kammern 34 auf. Jede dieser Kammern 34 wird durch vier Kammerwände gebildet, die mit den durchströmenden Gasvolumenströmen R und F in flächigen Kontakt gelangen.

Es ist vorgesehen, dass alle Kammerwände der Kammern 34 oder zumindest einige dieser Kammerwände mit einer Katalysatorschicht ausgebildet sind und bspw. mit einer solchen Katalysatorschicht beschichtet sind. Hierbei kann vorgesehen sein, dass sich eine solche Katalysatorschicht nicht vollflächig und insbesondere nicht über die gesamte Höhe H einer Kammerwand erstreckt. Alternativ und oder ergänzend hierzu kann vorgesehen sein, dass eine Katalysatorschicht auf einem Heizblech aufgebracht ist.

**Fig. 3** zeigt mehrere Heizbleche 41, die zu einem Heizblechpaket 40 zusammengefasst sind. Ein solches Heizblechpaket 40 kann in eine Kammer 34 des Rotors 31 eingesetzt werden und erhöht dessen Wärmespeichermasse. Gemäß der in Fig. 3 gezeigten Darstellung wird das Heizblechpaket 40 alternierend von oben nach unten und von unten nach oben von den Gasvolumenströmen R und F durchströmt. Hierbei gelangen die Gasvolumenströme R und F in flächigen Kontakt mit den Heizblechen 41. In dem gezeigten Ausführungsbeispiel sind die einzelnen Katalysatorschichten 42 nicht über die gesamte Durchströmungslänge (entspricht in etwa der Bauhöhe H des Rotors 31) ausgebildet, sondern sind lediglich im unteren Bereich und damit im Eintrittsbereich des heißen Rauchgasvolumenstroms R in den Rotor 31 über die Teilhöhe h ausgebildet. In diesem Bereich wird die wirkungsvolle katalytische Reaktion zur NH₃-Reduzierung erzielt. Die Teilhöhe h beträgt 20 bis 80 % und bevorzugt 40 bis 60 % der Gesamthöhe H des Rotors 31.

Wie zuvor erläutert wird eine Katalysatorschicht 42 auf die Oberfläche der Heizbleche 41 und/oder auf die Oberfläche der Kammerwände des Rotors 31 und damit direkt auf den Rotorkörper aufgebracht. Die für einen jeweiligen Prozess ideale Gesamtfläche aller Katalysatorschichten hängt von der maximalen Raumgeschwindigkeit ab, die vorzugsweise durch Simulation oder in einem Versuch ermittelt wird. Die Raumgeschwindigkeit ist das Verhältnis von Rauchgasvolumen (pro Stunde) zu eingesetztem Katalysatorvolumen. Die maximale Raumgeschwindigkeit ist u. a. von der Temperatur des Rauchgasvolumenstroms R sowie auch von dessen individuellen Zusammensetzung abhängig.

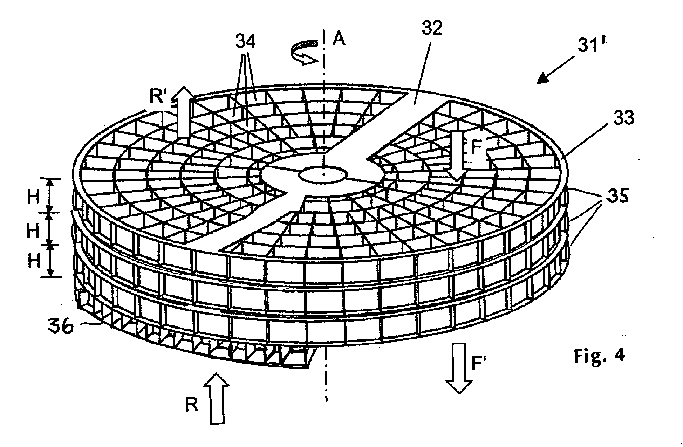

Anstelle des in **Fig. 2** dargestellten Rotors 31, der aus einer einzigen Lage mit Kammern besteht, kann der Rotor 31*'* auch aus mehreren derartigen Lagen 35 zusammengesetzt sein, wie in **Fig. 4** veranschaulicht ist. Es kann bei einer derartigen Konstellation ausreichend sein, lediglich die untere, dem Rauchgaseintritt R zugewandte Schicht mit Katalysatormaterial zu beschichten, wie oben beschrieben wurde.

Alternativ oder zusätzlich zur Beschichtung von regenerativen Flächen des Rotors 31, 31*'* ist nach einer weiteren Ausführungsform der Erfindung unmittelbar vor dem Eintritt von Rauchgas R in den Rotor 31, 31' ein stationärer Katalysatorträger 36 angeordnet, der sich über die gesamte Eintrittsfläche erstreckt. In dem in Fig. 4 dargestellten Beispiel ist er als Gitterrost ausgebildet, dessen Flächen ausreichend groß sind, um die gewünschte katalytische Reduktion von NH₃ zu gewährleisten. Die Anordnung stromaufwärts zum Rotor 31, 31' hat den Vorteil, dass das die Temperatur des Rauchgases noch sehr hoch ist, was die katalytische Reaktion verbessert.

## Patentansprüche

1. Verfahren zur Ammoniakentfernung aus dem Rauchgas eines Kraftwerks, insbesondere in einem Kohlekraftwerk, basierend auf einer selektiven nicht-katalytischen Reduktion (20),
**dadurch gekennzeichnet,**
**dass** ein Rauchgasvolumenstrom (R) der selektiven nicht-katalytischen Reduktion (20) nachfolgend einer katalytischen Reaktion unterzogen wird, wobei diese katalytische Reaktion in einem Regenerativ-Wärmetauscher (30) mit katalytischen Eigenschaften erfolgt.

2. Verfahren nach Anspruch 1,
**dadurch gekennzeichnet,**
**dass** die katalytische Reaktion im Regenerativ-Wärmetauscher (30) dazu dient, im Rauchgasvolumenstrom (R) enthaltene NH₃-Reste zu reduzieren.

3. Regenerativ-Wärmetauscher (30) mit einem Rotor (31) oder einem Stator zur Wärmeübertragung von wenigstens einem Rauchgasvolumenstrom (R) auf wenigstens einen anderen Gasvolumenstrom (F),
**dadurch gekennzeichnet,**
**dass** der Rotor (31) oder der Stator bezüglich des Rauchgasvolumenstroms (R) mit katalytischen Eigenschaften ausgebildet ist.

4. Regenerativ-Wärmetauscher (30) nach Anspruch 3,
**dadurch gekennzeichnet,**
**dass** der Rotor (31) oder der Stator wenigstens eine Katalysatorschicht (42) aufweist, die in einem mit dem Rauchgasvolumenstrom (R) in Kontakt gelangenden Flächenabschnitt ausgebildet ist, und/ oder dass vor dem Rauchgaseintritt ein stationärer Katalysatorträger (36) angeordnet ist.

5. Regenerativ-Wärmetauscher (30) nach Anspruch 4,
**dadurch gekennzeichnet,**
**dass** die Katalysatorschicht (42) zur Reduktion von NH₃-Resten im Rauchgasvolumenstrom (R) ausgebildet ist.

6. Regenerativ-Wärmetauscher (30) nach Anspruch 4 oder 5,
**dadurch gekennzeichnet,**
**dass** die Katalysatorschicht (42) am Rotorkörper oder am Statorkörper aufgebracht ist.

7. Regenerativ-Wärmetauscher (30) nach Anspruch 4 oder 5,
**dadurch gekennzeichnet,**
**dass** die Katalysatorschicht (42) auf einem im Rotor (31) oder im Stator angeordneten Heizblech (41) aufgebracht ist.

8. Regenerativ-Wärmetauscher (30) nach einem der Ansprüche 4 bis 7,
**dadurch gekennzeichnet,**
**dass** die Katalysatorschicht (42) bezüglich einer Durchströmungslänge (H) des Rauchgasvolumenstroms (R) durch den Rotor (31) oder den Stator nur über eine Teillänge (h) aufgebracht ist, und zwar insbesondere im Eintrittsbereich des Rauchgasvolumenstroms (R) in den Rotor (31) oder in den Stator.

9. Regenerativ-Wärmetauscher (30) nach einem der Ansprüche 4 bis 8,
**dadurch gekennzeichnet,**
**dass** die Katalysatorschicht (42) aus einem Metall und insbesondere aus einem Zeolith-Material gebildet ist.

10. Regenerativ-Wärmetauscher (30) nach einem der Ansprüche 4 bis 9,
**dadurch gekennzeichnet,**
**dass** der stationäre Katalysatorträger (35) als Gitterrost ausgebildet ist.

11. Verfahren zur katalytischen Nachbehandlung eines Rauchgasvolumenstroms (R), insbesondere in einem Kohlekraftwerk, unter Verwendung eines Regenerativ-Wärmetauschers (30) gemäß einem der vorausgehenden Ansprüche 3 bis 10.
